# EUROPEAN PATENT APPLICATION

(11) **EP 1 223 522 A2**
(43) Date of publication of application: **17.07.2002**
(21) Application number: 01130447.4
(22) Date of filing: 20.12.2001
(51) Int. Cl.: G06F 17/60

(54) **System for improving efficiency of cargo transportation service**

(30) Priority: 26.12.2000 JP 2000394178; 02.04.2001 JP 2001103446
(71) Applicant: Tohsho Logitic Corporation, Hatsukaichi-shi, Hiroshima (JP)
(72) Inventor: Shimada, Masaharu, Hiroshima (JP)
(74) Representative: Glawe. Delfs. Moll

(57) **Abstract**

A system is provided by which forwarders can improve the loading efficiency of vehicles and shippers can reduce the transportion cost, thereby improving the transportation efficiency as a whole. Shippers transmit details regarding cargoes to be delivered to a center as cargo information. Forwarders transmit details regarding transportion vehicles having empty space to the center as empty vehicle information. At the center, the cargo information and empty vehicle information are matched, and if there are any that match and coincide, they are notified to shippers as transportation information and simultaneously to forwarders as cargo-receiving information.

## Description

### BACKGROUND OF THE INVENTION

This invention relates to a system for improving efficiency of cargo transportation service.

Ordinarily, a cargo that does not fill one vehicle unit requires a comparatively high transportation cost. Even if there is an empty space in one vehicle, a freight charge for one vehicle is usually asked. Also, for so-called courier service, it is impossible to send a cargo exceeding a predetermined weight or size. For a cargo thereunder, the cost is high. Further, transportation arrangements are necessary for every destination and every cargo. This is troublesome.

As a method of reducing such transportion charges, using returning service was only available. But the cost reduction rate is not very high. Thus further cost reduction is desired.

Vacancy in the returning service and transportation service which is bad in the loading efficiency mean more vehicles on the road and worsen the environment.

An object of this invention is to provide a system by which forwarders can improve the loading efficiency of vehicles and shippers can reduce the transportion cost, thereby improving the transportation efficiency as a whole.

### SUMMARY OF THE INVENTION

According to this invention, there is provided a system for improving cargo transportion service comprising a means for transmitting details regarding cargoes to be delivered to a concentration center as cargo information, a means for transmitting details regarding transportion vehicles having empty space to the concentration center as empty vehicle information, a means for matching the cargo information and the empty vehicle information, and a means for communicating, if they coincide, with a shipper as transportation information corresponding to the cargo information and communicating with a forwarder as cargo-receiving information corresponding to the empty vehicle information.

The cargo information includes at least cargo sizes, weights, shippers, destinations, shipping dates and arrival dates, wherein the empty vehicle information includes at least loadable empty spaces, loadable cargo weights, cargo-receiving places, cargo-delivering places, cargo-receivable dates and deliverable dates, and wherein the respective items are compared and matched.

Priority of the matching is given in the following order: (1) direction and distance of the destination relative to the shipper and of the delivering place relative to the cargo-receiving place, (2) cargo weight and loadable cargo weight, and (3) cargo size and loadable empty space.

If positions of the shippers, destinations, cargo-receiving places and delivering places are indicated by coordinates, matching can be done easily.

Other features and objects of the present invention will become apparent from the following description made with reference to the accompanying drawings, in which:

### BRIEF DESCRIPTION OF THE DRAWINGS

Fig. 1 is a diagram showing hardware used in the system of this invention;
Fig. 2 is a block diagram showing the relation of information exchange with a center; and
Fig. 3 is a flowchart showing how information is processed at the center.

### DETAILED DESCRIPTION OF THE PREFERRED EMBODIMENT

One embodiment of this invention will be described with reference to the attached drawings.

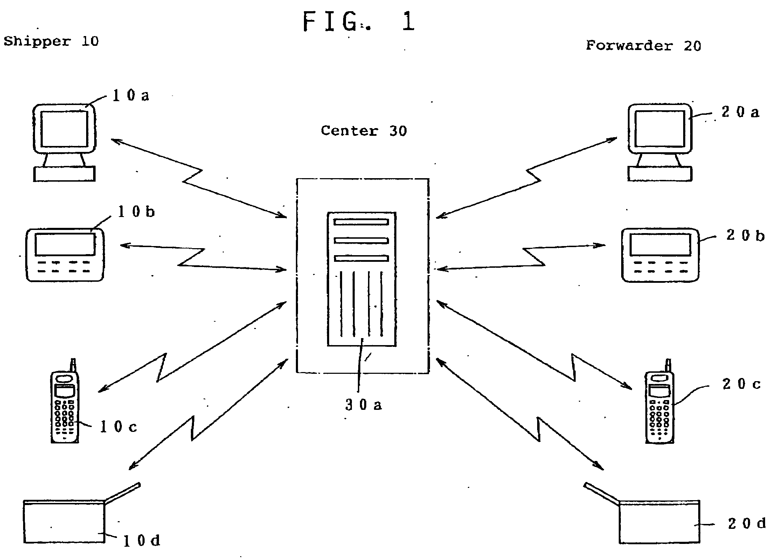

As shown in Fig. 1, individual shippers 10, i.e. those who wish to transport cargoes, and individual forwarders 20 can perform data communication with a concentration center 30 through a public communication network using suitable communication means such as personal computers 10a, PDA (personal digital assistant) 10b, cellphones 10c or faximiles 10d. In the concentration center 30, a computer 30a is installed.

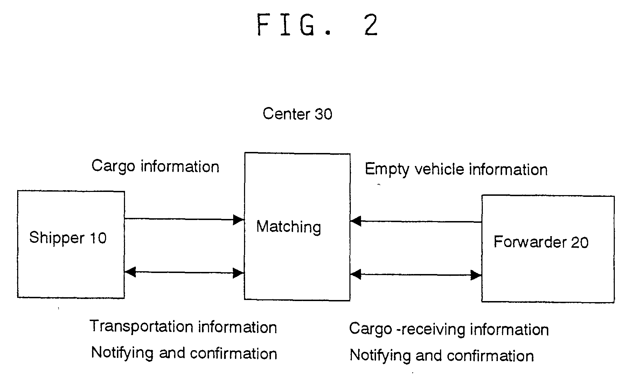

Using such communications means, the shippers 10 register cargo information at the center 30 as shown in Fig. 2. The cargo information includes cargo sizes (length x width x height), allowability of turnover, weights, kinds of cargo (contents), shippers (areas, places), destinations (areas, places), shipping dates, arrival dates (or delivery due dates) and desired costs. On the other hand, the forwarders 20 register empty vehicle information at the center 30. The empty vehicle information includes vehicle loadable empty spaces (length x width x height), loadable cargo weights, load-receiving places (or areas), delivering places (or areas), unloadable times, cargo-receivable dates and times, deliverable dates and times, and freight costs. Of course, this is necessary for both going and returning service.

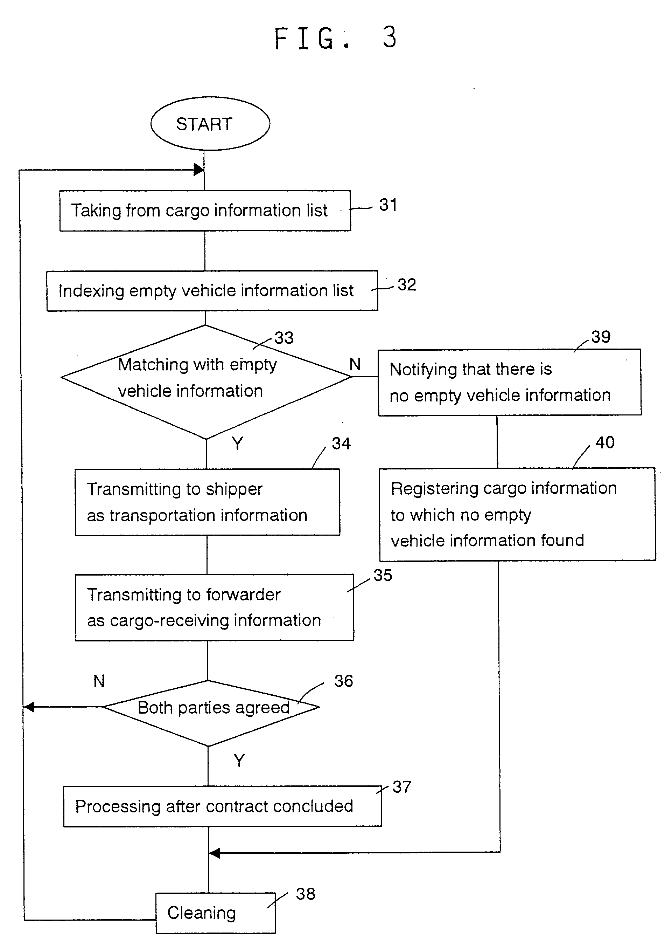

Based on the cargo information and empty vehicle information, matching process is carried out on the computer 30a. The process is shown in Fig. 3. First in Step 31, cargo information is taken out of the shippers' registration list. The list is indexed in which the empty vehicle information from the forwarders is registered (Step 32). The cargo information and empty vehicle information are matched or tallied (Step 33). In matching, for example, cargo sizes and weights, loadable empty spaces and loadable cargo weights, shippers and cargo-receiving places, destinations and delivering places, shipping dates and cargo-receivable dates, arrival dates (delivery due dates) and deliverable dates, and desired costs and transportation costs are tallied.

The priority of matching is preferably given in the following order: (1) direction and distance of the destination relative to the shipper and of the delivering place relative to the cargo-receiving place, (2) cargo weight and loadable cargo weights, and (3) cargo size and loadable empty space. For matching of the item (1), if the shipper, destination, cargo-receiving place and delivering place are indicated by coordinates, matching can be carried out easily. The coordinates may be registered each time by the shipper 10 and forwarder 20. But it is also possible to calculate from a map information data base with the computer 30a.

The above items can be inputted with some degree of widths or ranges. But, depending upon items, predetermined widths or ranges may be given by a program. In particular, for the shippers and cargo-receiving places, and the destinations and delivering places, they do not have to coincide strictly. If they are within a radius of e.g. 10 km from road traffic map information in the computer 30a, they may be considered to be coincident. Also, it is preferable that a plurality of shippers and destinations can be matched at one cargo-receiving place and one delivering place. Further, the desired cost and transportion cost may be determined by conversation between shippers and forwarders, or auction may be used.

If there are a plurality of pieces of empty vehicle information which appear to meet the conditions in Step 33, all of such information is transmitted to shippers as transportation information (Step 34) and is also notified to each forwarder as cargo-receiving information corresponding to empty vehicle information (Step 35). For those to which shippers and forwarders have agreed (Step 36), suitable steps such as preparation of invoices and acceptance slips are carried out (Step 37). Step 38 is a cleaning process in which cargo information of which the cargo-shipping dates have passed and empty vehicle information of which the cargo-receivable dates have passed are deleted from the registration list.

If no empty vehicle information that matches is found in Step 33, the shipper is notified of this fact (Step 39) and it is recommended to inquire the center after a predetermined time. Also, cargo information to which there has not been any empty vehicle information is stored at the concentration center for a predetermined time period. In this case, when transportion information is received, the registration list of the cargo information to which there has been no empty vehicle information is indexed and matched by the computer 30a. Matching may be done in the same way as mentioned in Step 33.

The center 30 may be a concentrated calculation center provided with a computer 30a, a concentration center connected online, or a server of the internet.

According to this invention, shippers' cargo information is collected and registered in a computer at the center for matching as a whole with empty vehicle information registered by forwarders. Thus, vehicles are arranged among all the users of the system, and the shippers can send cargoes at less expensive transportation costs using more convenient transportation service, while the forwarders can improve loading rates and find new customers.

## Claims

1. A system for improving cargo transportion service comprising a means for transmitting details regarding cargoes to be delivered to a concentration center as cargo information, a means for transmitting details regarding transportion vehicles having empty space to the concentration center as empty vehicle information, a means for matching said cargo information and said empty vehicle information, and a means for communicating, if they coincide, with a shipper as transportation information corresponding to said cargo information and communicating with a forwarder as cargo-receiving information corresponding to said empty vehicle information.

2. A system for improving cargo transportion service as claimed in claim 1 wherein said cargo information includes at least cargo sizes, weights, shippers, destinations, shipping dates and arrival dates, wherein said empty vehicle information includes at least loadable empty spaces, loadable cargo weights, cargo-receiving places, cargo-delivering places, cargo-receivable dates and deliverable dates, and wherein the respective items are compared and matched.

3. A system for improving cargo transportion service as claimed in claim 2 wherein priority of said matching is given in the following order: (1) direction and distance of the destination relative to the shipper and of the delivering place relative to the cargo-receiving place, (2) cargo weight and loadable cargo weight, and (3) cargo size and loadable empty space.

4. A system for improving cargo transportion service as claimed in claim 2 or 3 wherein positions of said shippers, destinations, cargo-receiving places and delivering places are indicated by coordinates.
